Europäisches Patentamt

European Patent Office

Office européen des brevets

(11) Publication number : **0 527 048 A1**

# (12) EUROPEAN PATENT APPLICATION

(21) Application number : **92307164.1**

(22) Date of filing : **05.08.92**

(51) Int. Cl.⁵ : **B60C 9/20**

(30) Priority : **07.08.91 JP 198070/91**

(43) Date of publication of application :
**10.02.93 Bulletin 93/06**

(84) Designated Contracting States :
**DE FR GB IT**

(71) Applicant : **BRIDGESTONE CORPORATION**
**10-1 Kyobashi 1-Chome, Chuo-Ku**
**Tokyo 104 (JP)**

(72) Inventor : **Tomura, Atsushi**
**2-8, Nakazato 5-chome**
**Kiyose City, Tokyo (JP)**

(74) Representative : **Whalley, Kevin et al**
**MARKS & CLERK 57/60 Lincoln's Inn Fields**
**London WC2A 3LS (GB)**

(54) **Pneumatic radial tires for motorcycles.**

(57) In a pneumatic radial tire for motorcycles, the tread has a directional tread pattern defined by a plurality of inclined grooves formed in the tread (6) so as to converge from each tread end (e) toward a tread center, and a belt (3) is comprised of two belt layers (3a,3b) having the same width provided that these belt layers are overlapped with each other so as to form a non-laminated region in each tread end region, and wherein in the non-laminated end regions the cord angle of the respective belt layer is opposite to the inclinated direction of the inclined grooves in the tread.

FIG. 3

This invention relates to a pneumatic radial tire for a motorcycle, and more particularly to an improvement in a combination of a tread pattern and a belt structure in the pneumatic radial tire for motorcycle.

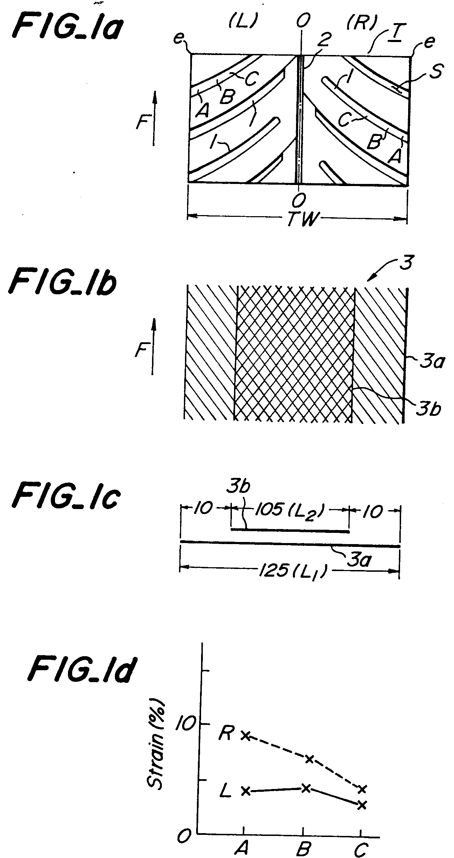

Recently, in order to improve wet performances running on wet road at a high speed, particularly a drainage property, it is usually conducted to specify a rotational direction (arrow F) as shown in Figs. 1a and 1b in not only radial tires for motorcycles but also radial tires for four-wheeled vehicles.

As a tread pattern in this type of the tire, it is in fusion that a plurality of slant grooves 1 extending from a tread end region e toward a center of the tire O-O and inclining at a certain angle with respect to the circumferential direction are arranged on the circumference of the tire at a proper interval and symmetrically with respect to the equator as shown in Fig. 1a. It seems that such a pattern considers the aforementioned function and effect. Furthermore, in the pneumatic radial tire for motorcycles having the above tread pattern, the belt has such a structure that as schematically shown in Fig. 1b viewing from the outer surface of the tire, a belt 3 is comprised of a first belt layer 3a having a wide width and containing cords inclined at a cord angle of 10°-30° in one direction with respect to the equatorial plane and a second belt layer 3b having a narrow width and containing cords inclined at a cord angle of 10°-30° in a direction opposite to the cord direction of the first belt layer 3a with respect to the equatorial plane. Therefore, the cords are symmetrically arranged in the overlapped portion of the belt layers, while only one belt layer is existent at a width of about 5-15 mm in the same cord direction with respect to the equatorial plane in the tread end region. Thus, the conventional motorcycle radial tire has the usual belt structure that the first and second belt layers are overlapped with each other at a given step amount (about 5-15 mm) without using two belt layers having the same width.

In an embodiment of the conventional pneumatic radial tire for the motorcycle, the belt 3 is designed to have, for example, a width of the first belt layer 3a of $L_1 = 125$ mm, and a width of the second belt layer 3b of $L_2 = 105$ mm as shown in Fig. 1c.

In the pneumatic radial tire for the motorcycle having a combination of the tread pattern shown in Fig. 1a and the belt structure shown in Fig. 1b, the drainage property and the like are good, but when the slant groove 1 inclined in the same direction as the cord direction of the belt layer is existent in each side end portion of the tire, particularly a region of 5-20 mm ranging from the tread end toward the tire center, crack S is created in the bottom of this slant groove 1. Particularly, such cracks are frequently created in the radial tire for front wheel having a relatively small radius of curvature of the tread.

It is, therefore, an object of the invention to prevent the occurrence of cracks at bottom of the slant groove located at both side end portions of the tread in the pneumatic radial tire for motorcycle having the above unidirectional tread pattern and to provide a pneumatic radial tire for motorcycle having an optimum belt structure for preventing the occurrence of cracks.

The inventor has made various studies in connection with the above problem and found out that cracks are always created in the same tread end region in the same belt structure as mentioned above, i.e. cracks S are always created on the bottoms of the slant grooves 1 inclined in the same direction as the cord direction of the belt layer among the belt layers having a step difference of about 5-15 mm at a right-side (R) tread end region as shown in Figs. 1a and 1b.

In the conventional tire as shown in Figs. 1a and 1b, strain was measured at three positions A, B and C of the bottom of the slant groove 1 (i.e. distances of 5 mm, 15 mm and 25 mm from the tread end) to obtain results as shown in Fig. 1d. The measurement was conducted at a state that the tire was mounted onto a nominal rim and inflated at a nominal internal pressure under a nominal load. As seen from Fig. 1d, the difference of strain is not less than about 2 times between both tread end regions.

The inventor has made further studies and found out that since the radius of curvature in the ground contact portion of the tread in the motorcycle tire is smaller (usually 50-150 mm) than that of the usual four-wheeled tire and the radius of curvature in the front tire for the motorcycle is generally smaller than that of the rear tire, strain concentrates in the tread end region during the running under a load, particularly during the straight running. This is due to the fact that strain is concentrated in both the tread end regions by shifting the curvature of the tire toward both side portions under loading. The inventor has aimed at the inclination direction of the slant groove with respect to the circumferential direction of the tire and the cord direction of the belt layer at the tread end region for solving the above problem and as a result the invention has been accomplished.

According to the invention, there is the provision of a pneumatic radial tire for motorcycle comprising a radial carcass toroidally extending between a pair of bead portions, a tread extending on an outer periphery of a crown portion of the carcass along a profile of the carcass at an approximately equal thickness ranging from a center of the crown portion toward a side end position corresponding to a position of maximum width of the tire and comprising a plurality of grooves inclined in a direction converging from each of the side end positions toward the center of the crown portion and arranged at a given interval in the circumferential direction and a plurality of land portions defined by these grooves, and a belt arranged between the carcass and the tread and comprised of at least two belt layers containing organic fiber cords inclined at a given cord angle with respect to an equatorial plane of the tire, which layers being laminated so as to cross the cords of the layers with each other at a given width region and having a width equal to or somewhat narrower than a width of the tread; said belt being composed of a layer laminated region having a width at least corresponding to a width at a central portion of the tread contacting with ground during straight running and a non-laminated end region corresponding to each end portion of the tread not contacting with ground during straight running and having a cord angle of the belt layer opposite to the inclination direction of the slant groove in the tread.

The invention will be described with reference to the accompanying drawings, wherein:

Fig. 1a is a partial plan view showing a tread pattern of the conventional motorcycle tire;

Fig. 1b is a schematically partial plane view showing a belt structure of the conventional motorcycle tire;

Fig. 1c is a diagrammatically partial lateral section view showing an embodiment of the belt structure in the conventional motorcycle tire;

Fig. 1d is a graph showing a relation of strain (%) to positions at a slant groove bottom of the tread in the conventional motorcycle tire;

Fig. 2a is a schematically partial plane view showing a belt structure of the pneumatic radial tire for motorcycle according to the invention;

Fig. 2b is a diagrammatically partial lateral section view showing an embodiment of the belt structure in the pneumatic radial tire for motorcycle according to the invention;

Fig. 2c is a graph showing a relation of strain (%) to positions at a slant groove bottom of the tread in the pneumatic radial tire for motorcycle according to the invention;

Fig. 3 is a schematically section view of the pneumatic radial tire for motorcycle according to the invention; and

Fig. 4 is a partial side view of the pneumatic radial tire for motorcycle according to the invention.

According to the invention, the belt arranged between the carcass and the tread and comprised of at least two belt layers containing organic fiber cords inclined at a given cord angle with respect to an equatorial plane of the tire, which layers being laminated so as to cross the cords of the layers with each other at a given width region and having a width equal to or somewhat narrower than a width of the tread, is composed of a layer laminated region having a width at least corresponding to a width at a central portion of the tread contacting with ground during straight running and a non-laminated end region corresponding to each end portion of the tread not contacting with ground during straight running and having a cord angle of the belt layer opposite to the inclination direction of the slant groove in the tread, whereby strain applied to the bottom of the slant groove can be suppressed to prevent the occurrence of cracks at the slant groove bottom.

In order to more develop the above effect, the width of the non-laminated region in the belt layer at each tread end portion is within a range of 3-20%, preferably 5-15% of the full width of the belt. When the width is less than 3%, the discontinuance of rigidity is caused in the belt and hence it is difficult to conduct smooth turning. Moreover, such a range naturally corresponds to the region not contacting with ground during the straight running.

An embodiment of the pneumatic radial tire for motorcycle according to the invention will be described in detail with reference to the drawings.

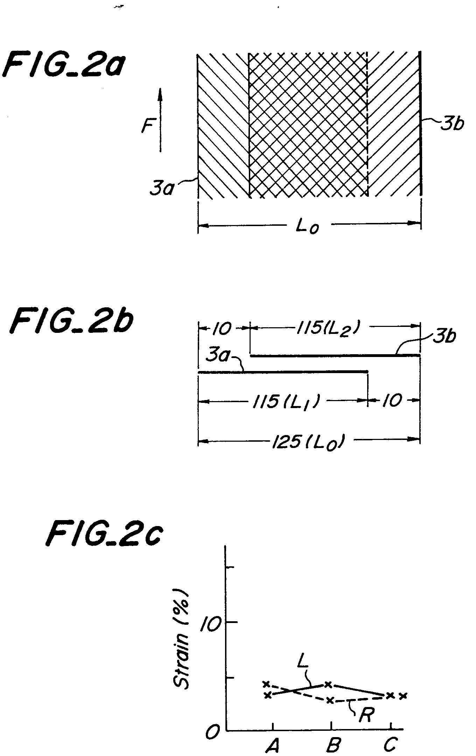

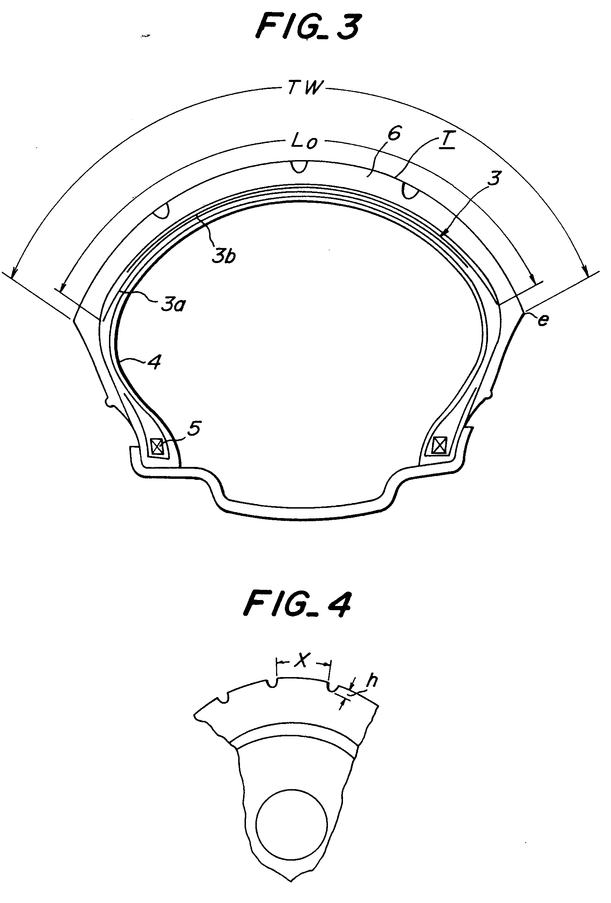

In Fig. 3 is sectionally shown a pneumatic radial tire T for motorcycle according to the invention, and Figs. 2a to 2c shows the belt structure applied to the pneumatic radial tire for motorcycle of Fig. 3 having a tire size of 120/60 R17 and a graph showing measured values of strain at given positions of the slant groove bottom, respectively.

In the pneumatic radial tire for motorcycle according to the invention, a carcass ply 4 containing nylon cords of 1260 d/2 arranged at a cord angle of 90° with respect to an equatorial plane is wound around a bead core 5 from inside toward outside, while a belt 3 is superimposed about a crown portion of the carcass ply 4 beneath a tread 6. The belt 3 is comprised of a first belt layer 3a and a second belt layer 3b viewed from the inside of the tire in the radial direction and having the same width, each containing nylon cords of 1890 d/2 arranged at a cord angle of 28° with respect to the equatorial plane. In the belt 3, the cords of the two layers 3a and 3b are crossed with each other. As shown in Figs. 2a and 2b, the two belt layers 3a and 3b are overlapped with each other at a region corresponding to a width of a central portion of the tread 6 contacting with ground during the straight running of the tire, while they are existent alone in a region corresponding to each end portion of the tread 6 not contacting with ground during the straight running without lamination. That is, the widths of these layers 3a, 3b are equal to each other at both end portions of the tread 6. Moreover, the cords in the first belt layer 3a are upward to the right and the cords in the second belt layer 3b are upward to the left as shown in Fig. 2a. The tread 6 extends on the outer periphery of the crown portion of the carcass ply 4 along the carcass profile at an approximately equal thickness ranging from the center of the crown portion toward a tread end e corresponding to a position of maximum tire width, and comprises a plurality of slant grooves inclined in a direction converging from each of the tread ends e toward the center of the crown portion and arranged at a given interval in the circumferential direction and a plurality of land portions defined by these slant grooves. These slant grooves are substantially the same as the slant groove in the conventional tire shown in Fig. 1a. Moreover, numeral 2 is a circumferential center groove.

In the pneumatic radial tire for motorcycle according to the invention, a circumferential length X of the land portion and a depth h of the slant groove at the tread end is usually designed so as to satisfy the following equation;

$$h/X \times 100 = 5 - 15\%$$

as shown in Fig. 4.

Although the cords in the radial carcass of the illustrated embodiment have a cord angle of 90° with respect to the equatorial plane, the cord angle in the radial carcass may be within a range of 75-90°.

Furthermore, the end of the carcass ply 4 is wound around the bead core 5 from the inside toward outside to terminate at a position substantially corresponding to a center of a sidewall portion (Fig. 3), but the position of the turnup end of the carcass ply may be made lower than the above sidewall center or higher than the sidewall center to terminate between the carcass ply 4 and the belt 3.

Moreover, the cord angle in the belt layers 3a, 3b is not restricted to the above value and may be selected from a range of 10-30° capable of developing proper effect when being used as a tire for motorcycle.

A concrete example of the tire according to the invention will be described below with respect to a tire having a tire size of 120/60 R17. As shown in Figs. 2 and 3, a tread width $T_w$ (periphery length) is 145 mm, and a full belt width $L_0$ (periphery length) is 125 mm, and widths $L_1$, $L_2$ of the first and second belt layers 3a, 3b are 115 mm, respectively. In the belt 3, an offset amount between the first and second belt layers 3a and 3b is 10 mm so as to be the full belt width $L_0$ = 125 mm as shown in Fig. 2b. Thus, the cords existent in both end regions of the belt corresponding to both end portions of the tread are arranged so that the cord direction inclined with respect to the circumferential direction of the tire is different from the case shown in Fig. 1b and crosses with the slant grooves 1 arranged in the tread as shown in Fig. 1a. That is, the cords in the first belt layer 3a are upward to the right and the cords in the second belt layer 3b are upward to the left as shown in Fig. 2a. Then, strain in the slant groove 1 of the tread 6 in the tire T having the belt 3 of the above structure was measured at positions A, B and C ranging from the tread end to 5, 15 and 25 mm in the same manner as in Fig. 1d to obtain results as shown in Fig. 2c. As seen from the comparison between Fig. 1d and Fig. 2c, there is not much difference of strain in the bottom of the slant groove 1 between both end portions of the tread in the tire according to the invention as compared with the conventional belt structure and also the value of strain is substantially the same between both end portions.

As mentioned above, according to the invention, the belt is comprised of at least two belt layers having the same width and containing cords arranged at a given cord angle with respect to the equatorial plane, the cords of which layers being crossed with each other, provided that these belt layers are laminated one upon the other at a given offset amount so as to form non-laminated region at both end portions not contacting with ground during straight running, whereby the strain produced at the bottom of the slant groove is substantially equal between both end portions of the tread and is very small as compared with the conventional motorcycle tire. As a result, there is hardly caused a possibility of creating cracks at the bottom of the slant groove during the straight running of the tire, and hence the durability of the tire is considerably increased. Furthermore, problems inherent to the outer profile of the tire for the motorcycle are advantageously solved without sacrificing the cost, productivity and the like, whereby the function of the directional tread pattern can sufficiently be developed.

## Claims

1. A pneumatic radial tire for a motorcycle, comprising a radial carcass (4) toroidally extending between a pair of bead portions (5), a tread (6) extending on the outer periphery of the crown portion of the carcass along the profile of the carcass at an approximately equal thickness from the center of the crown portion toward side end positions (e) corresponding to positions of maximum width of the tire and having a plurality of grooves inclined in a direction converging from each of the side end positions (e) toward the center of the crown portion and arranged at given intervals in the circumferential direction and a plurality of land portions defined by the said grooves, and a belt (3) arranged between the carcass and the tread and comprised of at least two belt layers (3a,3b) containing organic fiber cords inclined at a given cord angle with respect to an equatorial plane of the tire, which layers (3a,3b) are laminated so that the cords of the layers cross with each other at a given width region and have a width equal to or narrower than the width (TW) of the tread; the belt (3) being composed of a layer laminated region having a width at least corresponding to the width at the central portion of the tread contacting with the ground during straight running and a non-laminated end region corresponding to each end portion of the tread not contacting with the ground during straight running and having a cord angle of the belt layer opposite to the inclination direction of the inclined grooves in the tread.

2. A pneumatic radial tire as claimed in claim 1, characterized in that the width of the said non-laminated end region is 3-20% of the full width of the belt.

3. A pneumatic radial tire as claimed in claim 2, characterized in that the said width is 5-15% of the full width of the belt.

4. A pneumatic radial tire as claimed in any of claims 1 to 3, characterized in that the said cord angle of each of the belt layers (3a,3b) is within a range of 10-30° with respect to the equatorial plane of the tire.

FIG_Ia

(L)  0  (R)  T  e

e  2

C

B  I

A  S

F

I  C

B

A

0

TW

FIG_Ib

3

F

3a

3b

FIG_Ic

3b

|←10→|←105 (L₂)→|←10→|

125 (L₁)

3a

FIG_Id

Strain (%)

10

R

L

0  A  B  C

## FIG_2a

$F$

$3a$

$3b$

$L_0$

## FIG_2b

$10$

$115(L_2)$

$3b$

$3a$

$115(L_1)$

$10$

$125(L_0)$

## FIG_2c

Strain (%)

$10$

$L$

$R$

$0$

$A$     $B$     $C$

EP 0 527 048 A1

## FIG_3

## FIG_4

EP 0 527 048 A1

European Patent Office  **EUROPEAN SEARCH REPORT**  Application Number

| DOCUMENTS CONSIDERED TO BE RELEVANT | | | EP 92307164.1 | |
|---|---|---|---|---|
| Category | Citation of document with indication, where appropriate, of relevant passages | | Relevant to claim | CLASSIFICATION OF THE APPLICATION (Int. Cl.5) |
| Y | US - A - 4 867 219 (WYKOFF) <br> * Column 2, lines 32-52; column 3, lines 4-10; column 3, line 65 - column 4, line 5; fig. 3d * | | 1,4 | B 60 C 9/20 |
| A | | | 2,3 | |
| | -- | | | |
| Y | EP - A - 0 333 434 (SUMITOMO RUBBER INDUSTRIES LIMITED) <br> * Abstract; fig. 1 * | | 1,4 | |
| | -- | | | |
| A | US - A - 4 732 194 (SANETO et al.) <br> * Totality * | | 1 | |
| | ---- | | | |
| | | | | TECHNICAL FIELDS SEARCHED (Int. Cl.5) |
| | | | | B 60 C |

The present search report has been drawn up for all claims

| Place of search | Date of completion of the search | Examiner |
|---|---|---|
| VIENNA | 18-11-1992 | WIDHALM |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

9